# FASCICULE DE BREVET EUROPEEN

(11) **EP 2 431 925 B1**
(45) Date de publication et mention de la délivrance du brevet: **17.04.2013**
(21) Numéro de dépôt: 11181125.3
(22) Date de dépôt: 13.09.2011
(51) Int. Cl.: G06K 19/07

(54) **Procédé et dispositif de modulation de charge active par couplage inductif**
Verfahren und Vorrichtung für aktive Lastmodulation durch induktive Kopplung
Method and device for active load modulation by inductive coupling

(30) Priorité: 21.09.2010 FR 1003754
(43) Date de publication de la demande: 21.03.2012
(73) Titulaire: Inside Secure, 13856 Aix-en-Provence Cedex 3 (FR)
(72) Inventeur: Charrat, Bruno, 13090 Aix en Provence (FR); Pernisek, Florian, 13290 Les Milles (FR)
(74) Mandataire: Marchand, André

(56) Documents cités:
- EP-A2- 1 801 741
- EP-B1- 1 327 222
- WO-A1-01/67625
- US-A- 5 453 748
- US-B1- 7 106 246

## Description

La présente invention concerne un procédé d'émission de données par couplage inductif, comprenant les étapes consistant à recevoir un signal d'antenne au moyen d'un circuit d'antenne inductif en présence d'un champ magnétique externe alternatif, extraire du signal d'antenne un premier signal périodique, produire un second signal périodique au moyen d'un oscillateur synchrone présentant une entrée de synchronisation recevant le premier signal périodique, placer l'oscillateur dans un mode de libre oscillation et appliquer au circuit d'antenne des salves du second signal périodique pour générer un champ magnétique de modulation de charge active.

La présente invention concerne également un dispositif d'émission et de réception de données conçu pour mettre en oeuvre ce procédé.

La présente invention concerne de façon générale les techniques de communication par couplage inductif également appelées "communications à champ proche" ou "NFC" (Near Field Communications). Une communication par couplage inductif fait généralement intervenir un dispositif dit passif et un dispositif dit actif. Les deux dispositifs sont équipés d'une bobine d'antenne. Le dispositif actif émet un champ magnétique oscillant, par exemple à 13,56 MHz, et envoie des données au dispositif passif en modulant le champ magnétique. Ce champ magnétique est désigné dans ce qui suit "champ magnétique externe". Le dispositif passif envoie des données au dispositif actif par modulation de charge.

La modulation de charge peut être passive ou active. La modulation de charge passive consiste à modifier l'impédance de la bobine d'antenne du dispositif passif au rythme d'un signal de modulation de charge porteur de données. Cette modulation d'impédance se répercute sur l'impédance de la bobine d'antenne du dispositif actif, par couplage inductif. Le dispositif actif peut donc extraire de son signal d'antenne le signal de modulation de charge utilisé par le dispositif passif, et en déduire les données que le dispositif passif lui envoie.

La modulation de charge active consiste à émettre, au rythme du signal de modulation porteur de données, des salves de champ magnétique alternatif. Les salves de champ magnétique sont perçues par le dispositif actif comme une modulation de charge passive. Cette technique a été proposée par la demanderesse dans le brevet EP 1 327 222 (US 7 098 770B2), Cf. figures 4A à 4E, page 8 tableau 4, paragraphe 074.

La modulation de charge active offre, par rapport à la modulation de charge passive, une distance de communication supérieure et/ou une meilleure transmission des données dans un environnement difficile, par exemple un environnement perturbé par des masses métalliques génératrices de courants de Foucault. La modulation de charge active nécessite en contrepartie des moyens d'excitation de la bobine d'antenne et donc une source de courant, mais consomme beaucoup moins de courant qu'une émission permanente de champ magnétique.

Un dispositif à modulation de charge active ne peut donc être purement passif en termes d'alimentation électrique (un dispositif purement passif étant alimenté électriquement par le champ magnétique émis par le dispositif actif) mais est néanmoins considéré comme "passif" en ce qu'il n'émet pas le champ magnétique externe nécessaire à la communication.

Pour l'obtention d'une distance de communication maximale, la modulation de charge active nécessite également que le champ magnétique de modulation de charge soit en phase avec le champ magnétique externe émis par le dispositif actif. Des rotations de phase entre le champ magnétique de modulation de charge active et le champ magnétique externe pourraient entraîner des fluctuations indésirables dans la distance de communication.

Le brevet US 5,453,748 décrit un transpondeur comprenant un oscillateur local qui génère un signal local, et un oscillateur synchrone. Un comparateur compare le signal local avec un signal de référence reçu, et fournit un signal de comparaison à l'oscillateur synchrone qui se synchronise sur le signal de comparaison et fournit un signal verrouillé. Un combineur reçoit le signal local et le signal verrouillé et fournit un signal de réponse du transpondeur.

Le brevet EP 1 801 741 décrit un dispositif NFC à modulation de charge active utilisant une boucle à verrouillage de phase pour contrôler la phase du champ magnétique de modulation de charge (Cf. Fig. 19 de ce document). La boucle à verrouillage de phase comprend un VCO (oscillateur contrôlé en tension), un comparateur de phase et un filtre passe-bas fournissant une tension de contrôle au VCO. Le comparateur de phase reçoit, comme fréquence de référence, un premier signal périodique qui est extrait du signal d'antenne induit par le champ magnétique externe. La boucle à verrouillage de phase fournit un second signal périodique dont la phase est calée sur celle du premier signal périodique. Dans le mode émission de données, des salves du second signal périodique sont appliquées au circuit d'antenne pour générer les salves de champ magnétique.

Lorsque le dispositif bascule dans le mode émission de données, le premier signal périodique n'est plus appliqué au comparateur de phase et un circuit d'échantillonnage HLD ("Sample Hold") maintient la tension de contrôle appliquée au VCO. La boucle à verrouillage de phase bascule ainsi d'un mode de fonctionnement synchrone à un mode de libre oscillation et reste dans ce mode de fonctionnement jusqu'à la fin de l'émission de données.

Si l'on souhaite que les salves de champ magnétique soit en phase avec le champ magnétique externe, la boucle à verrouillage de phase doit présenter un glissement de phase très faible pendant toute la durée du mode émission de données, qui est au moins égale à la durée d'émission d'une trame de données. En pratique, le déphasage maximal toléré sur cette période est généralement de l'ordre 1/4 de la période du champ magnétique oscillant à 13,56 MHz.

A titre d'exemple, une trame ISO 14443-A présente une durée de l'ordre de 25,6 ms. La fréquence du signal périodique étant de 13,56 MHz, le glissement de phase de la boucle à verrouillage de phase en mode de libre oscillation ne doit de préférence pas être supérieur à 18 ns, soit 1/4 de la période du champ magnétique oscillant à 13,56 MHz.

Or, obtenir une stabilité supérieure à 18 ns sur une durée de 25,6 ms signifie que la boucle à verrouillage de phase doit offrir une précision extrême de l'ordre de 0,7 ppm ((18x10⁻⁹/25.6x10⁻³)*10⁶). Une telle précision nécessite une circuiterie de très haute qualité et coûteuse à réaliser.

Il pourrait donc être souhaité de prévoir un moyen permettant de fournir des salves de champ magnétique qui présentent un faible déphasage relativement au champ magnétique externe, sans faire appel à une circuiterie extrêmement précise et coûteuse à réaliser.

A cet effet, la présente invention propose d'utiliser un oscillateur synchrone et de resynchroniser l'oscillateur sur le champ magnétique externe avant chaque application au circuit d'antenne d'une salve d'un signal périodique fourni par l'oscillateur.

Plus particulièrement, des modes de réalisation de l'invention concernent un procédé d'émission de données par couplage inductif, comprenant les étapes consistant à recevoir un signal d'antenne au moyen d'un circuit d'antenne inductif en présence d'un champ magnétique externe alternatif, extraire du signal d'antenne un premier signal périodique, produire un second signal périodique au moyen d'un oscillateur synchrone présentant une entrée de synchronisation recevant le premier signal périodique, l'oscillateur présentant un mode d'oscillation synchrone calé en phase sur le premier signal périodique et un mode de libre oscillation, et appliquer au circuit d'antenne des salves du second signal périodique pour générer un champ magnétique de modulation de charge active. Le procédé comprend également les étapes consistant à placer l'oscillateur dans le mode d'oscillation synchrone avant chaque application d'une salve du second signal périodique au circuit d'antenne, et placer l'oscillateur dans un mode de libre oscillation pendant l'application d'une salve du second signal périodique au circuit d'antenne.

Dans un mode de réalisation, le procédé comprend l'étape consistant à, après l'application d'une salve du second signal périodique au circuit d'antenne, maintenir l'oscillateur dans le mode de libre oscillation pendant un temps de stabilisation du signal d'antenne, avant de replacer l'oscillateur dans le mode d'oscillation synchrone.

Dans un mode de réalisation, le procédé comprend les étapes consistant à fournir un signal de modulation porteur de données, appliquer le second signal périodique au circuit d'antenne lorsque le signal de modulation présente une première valeur logique, générer un signal de masquage ayant une valeur de masquage au moins lorsque le signal de modulation présente la première valeur logique, et bloquer l'application du premier signal périodique à l'entrée de synchronisation de l'oscillateur lorsque le signal de masquage présente la valeur de masquage.

Dans un mode de réalisation, le procédé comprend l'étape consistant à conférer à la valeur de masquage du signal de masquage une durée supérieure à celle de la première valeur logique du signal de modulation, afin de maintenir l'oscillateur dans le mode de libre oscillation pendant le temps de stabilisation du signal d'antenne.

Dans un mode de réalisation, le procédé comprend une étape consistant à déphaser le second signal périodique relativement au signal d'antenne.

Des modes de réalisation de l'invention concernent également un dispositif d'émission et de réception de données par couplage inductif comprenant un circuit d'antenne inductif dans lequel apparaît un signal d'antenne en présence d'un champ magnétique externe alternatif, des moyens pour extraire du signal d'antenne un premier signal périodique, un oscillateur synchrone présentant une entrée de synchronisation recevant le premier signal périodique, fournissant un second signal périodique, l'oscillateur présentant un mode d'oscillation synchrone calé en phase sur le premier signal périodique et un mode de libre oscillation, et un circuit de modulation de charge active, configuré pour appliquer au circuit d'antenne des salves du second signal périodique et générer un champ magnétique de modulation de charge active. Le dispositif est configuré pour placer l'oscillateur dans le mode d'oscillation synchrone avant chaque application d'une salve du second signal périodique au circuit d'antenne, et placer l'oscillateur dans le mode de libre oscillation pendant l'application d'une salve du second signal périodique au circuit d'antenne.

Dans un mode de réalisation, le dispositif est configuré pour, après l'application d'une salve du second signal périodique au circuit d'antenne, maintenir l'oscillateur dans le mode de libre oscillation pendant un temps de stabilisation du signal d'antenne, avant de replacer l'oscillateur dans le mode d'oscillation synchrone.

Dans un mode de réalisation, le dispositif est configuré pour générer ou recevoir un signal de modulation de charge porteur de données, appliquer le second signal périodique au circuit d'antenne lorsque le signal de modulation) présente une première valeur logique, générer un signal de masquage ayant une valeur de masquage au moins lorsque le signal de modulation présente la première valeur logique, et bloquer l'application du premier signal périodique à l'entrée de synchronisation de l'oscillateur lorsque le signal de masquage présente la valeur de masquage.

Dans un mode de réalisation, le dispositif est configuré pour conférer à la valeur de masquage du signal de masquage une durée supérieure à celle de la première valeur logique du signal de modulation, afin de maintenir l'oscillateur dans le mode de libre oscillation pendant le temps de stabilisation du signal d'antenne.

Dans un mode de réalisation, l'oscillateur synchrone est du type oscillateur astable présentant une fréquence propre d'auto-oscillation déterminée par des composants de l'oscillateur.

Dans un mode de réalisation, l'oscillateur synchrone est du type numérique et est configuré pour, dans le mode d'oscillation synchrone, recopier en sortie la période du signal périodique appliqué sur l'entrée de synchronisation, et, dans le mode de libre oscillation, reconstituer en sortie la fréquence reçue sur l'entrée de synchronisation pendant le mode d'oscillation synchrone.

Dans un mode de réalisation, l'oscillateur synchrone comprend une boucle à verrouillage de phase comprenant un comparateur de phase fournissant un signal de phase, un filtre passe-bas actif recevant le signal de phase et fournissant une tension de contrôle, un oscillateur contrôlé en tension recevant la tension de contrôle et fournissant le second signal périodique, et des moyens pour, lors du passage dans le mode de libre oscillation, bloquer le comparateur de phase et maintenir à l'entrée de l'oscillateur contrôlé en tension la valeur de la tension de contrôle.

Dans un mode de réalisation, le dispositif comprend des moyens pour déphaser le second signal périodique relativement au signal d'antenne.

Des modes de réalisation de l'invention concernent également un dispositif comprenant un dispositif d'émission et de réception de données selon l'invention, et au moins un processeur hôte fournissant au dispositif des données à émettre.

Dans un mode de réalisation, le dispositif est monté dans ou sur un support portable.

Des modes de réalisation de l'invention concernent également une carte à puce, comprenant au moins un processeur et un dispositif d'émission et de réception de données selon l'invention.

Des modes de réalisation d'un procédé et d'un dispositif selon l'invention seront décrits dans ce qui suit à titre non limitatif en relation avec les figures jointes, parmi lesquelles :
- la figure 1 représente un dispositif NFC d'émission/réception de données selon l'invention comprenant un oscillateur synchrone,
- les figures 2A à 2D montrent des signaux intervenant dans le fonctionnement du dispositif de la figure 1 lors de l'émission de données par modulation de charge active,
- les figures 3A à 3D montrent d'autres signaux intervenant dans le fonctionnement du dispositif de la figure 1 lors de l'émission de données par modulation de charge active,
- la figure 4 montre une erreur de phase entre un premier signal périodique et un second signal périodique utilisés par le dispositif de la figure 1,
- la figure 5 représente un premier exemple de réalisation d'un oscillateur synchrone,
- la figure 6 représente un second exemple de réalisation d'un oscillateur synchrone,
- la figure 7A montre la forme d'un signal d'antenne du dispositif de la figure 1 lors de la réception et de l'émission de données, et les figures 7B à 7E montrent des signaux associés au signal d'antenne,
- la figure 8 représente une variante de réalisation d'une partie du dispositif de la figure 1,
- la figure 9 représente une autre variante de réalisation du dispositif de la figure 1,
- la figure 10 montre un exemple de dispositif portable comprenant un dispositif d'émission/réception de données selon l'invention, et
- les figures 11A, 11B sont des vues de dessus et de dessous d'un autre exemple de dispositif portable comprenant un dispositif d'émission/réception de données selon l'invention.

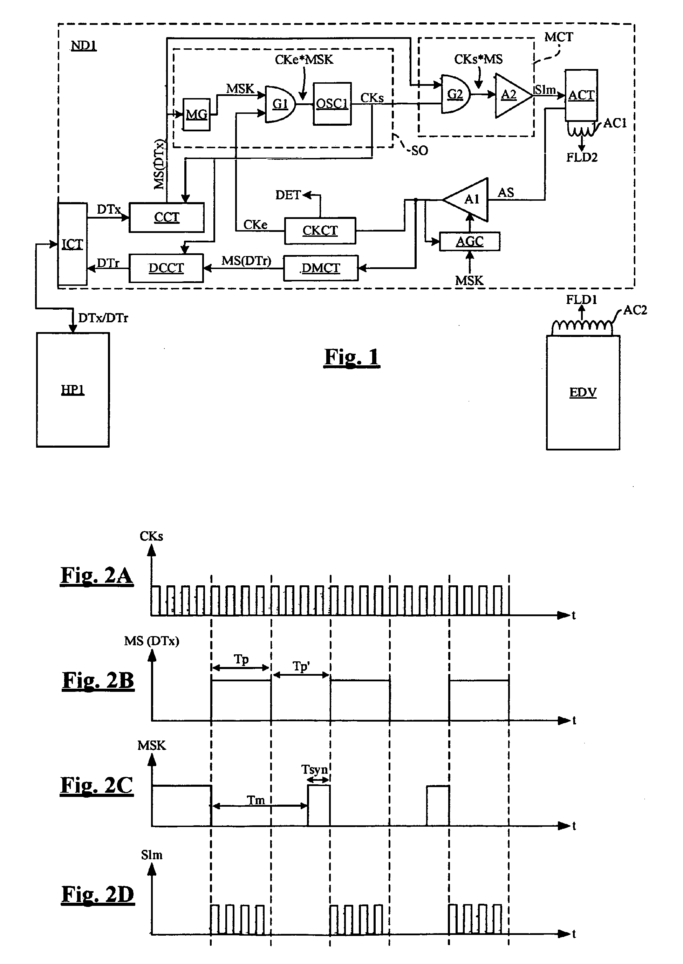

La figure 1 représente un dispositif ND1 d'émission/réception de données selon l'invention, fonctionnant par couplage inductif. Le dispositif ND1 comprend :
- un circuit d'interface de communication à contact ICT,
- un circuit d'antenne ACT accordé sur une fréquence porteuse, comprenant une bobine d'antenne AC1 et pouvant comporter divers autre composants tels des condensateurs et/ou des self-inductances,
- un circuit de démodulation DMCT couplé à un circuit de décodage DCCT, pour recevoir des données DTr via le circuit d'antenne,
- un circuit de codage CCT couplé à un circuit de modulation MCT, pour émettre des données DTx via le circuit d'antenne,
- un circuit d'horloge CKCT, et
- un oscillateur synchrone SO.

Le circuit d'interface de communication à contact ICT permet de relier le dispositif ND1 à au moins un processeur hôte HP1. Le processeur hôte HP1 fournit les données DTx et reçoit les données DTr. Les données DTx/DTr sont généralement des données d'application d'une application NFC (transaction, paiement, échanges d'informations, etc.). Dans une variante, le dispositif ND1 peut être autonome et comprendre un processeur interne configuré pour gérer des applications sans contact. Le processeur interne génère alors lui-même les données DTx et traite les données DTr.

Le circuit d'horloge CKCT et le circuit démodulateur DMCT reçoivent un signal d'antenne AS présent dans le circuit d'antenne ACT. Le signal d'antenne AS est par exemple extrait du circuit d'antenne par un amplificateur A1 dont le gain est contrôlé par un circuit de contrôle de gain automatique AGC. Le signal d'antenne AS apparaît en présence d'un champ magnétique externe alternatif FLD1 émis par un dispositif externe EDV de type lecteur NFC, équipé d'une bobine d'antenne AC2 et fonctionnant dans le mode actif (émission permanente du champ magnétique). Le champ FLD1 oscille par exemple à une fréquence porteuse de 13,56 MHz (normes ISO 14443, ISO 13693, Sony Felica®).

Le circuit d'horloge CKCT fournit un signal d'horloge externe CKe, ou "premier signal périodique", dont la fréquence est généralement identique à la fréquence porteuse, soit 13,56 MHz dans le cadre des normes précitées. Dans un mode de réalisation, le circuit CKCT fournit également un signal de DET qui présente une valeur déterminée, par exemple 1, lorsque le champ FLD2 est détecté. Le signal DET forme un signal de détection de porteuse qui peut être utile dans certains modes de réalisation du dispositif ND1.

L'oscillateur synchrone SO reçoit le signal d'horloge externe CKe et fournit un signal d'horloge interne CKs, ou "second signal périodique". L'oscillateur SO présente un mode d'oscillation synchrone où la phase du signal CKs est calée sur celle du signal CKe, et un mode de libre oscillation où le signal CKs n'est plus calé en phase sur le signal CKe.

Pour l'envoi de données DTr au dispositif ND1, le dispositif externe EDV applique au champ magnétique FLD1 une modulation, par exemple une modulation d'amplitude, au moyen d'un signal de modulation porteur de données MS(DTr). Le signal MS(DTr) se répercute dans le signal d'antenne AS et est extrait de celui-ci par le circuit de démodulation DMCT, après suppression de la porteuse. Le circuit DMCT fournit le signal de modulation MS(DTr) au circuit DCCT, qui décode et fournit les données DTr au circuit d'interface de communication ICT ou au processeur interne du dispositif ND1 si celui-ci est équipé d'un tel processeur.

Les données DTx à envoyer au dispositif externe EDV sont fournies au circuit de codage CCT. Celui-ci fournit alors au circuit de modulation MCT un signal de modulation porteur de données MS(DTx). Ce signal de modulation MS(DTx) peut être modulé avec une sous-porteuse dérivée de la fréquence porteuse, par exemple une sous-porteuse de 848 kHz (ISO 14443) ou de 424 kHz (ISO 15693) ou être seulement codé en bande de base sans sous-porteuse (Sony Felica®). Pour générer la sous-porteuse, le circuit MCT reçoit le signal d'horloge interne CKs fourni par l'oscillateur synchrone.

Le circuit de modulation MCT est ici un circuit de modulation de charge active mettant en oeuvre le procédé décrit par la demanderesse dans le brevet EP 1 327 222 (US 7 098 770B2). Le circuit MCT fournit au circuit d'antenne ACT un signal de modulation de charge active Slm qui comprend des salves (trains d'onde) du signal d'horloge interne CKs, entrecoupées de périodes de non-modulation où le signal Slm présente une valeur par défaut, par exemple 0. Le circuit modulateur MCT comprend ici une porte logique G2 de type ET recevant les signaux CKs et MS(DTx) et fournissant le signal Sml, et un amplificateur A2 reliant la sortie de la porte G2 et le point d'application du signal Sml au circuit d'antenne ACT.

Le signal Slm est ici égal à 0 quand le signal MS(DTx) est égal à 0, et recopie le signal CKs lorsque le signal MS(DTx) est égal à 1. Ainsi, lorsque le signal MS(DTx) est égal à 1, le circuit d'antenne ACT reçoit une salve du signal CKs et la bobine d'antenne AC1 émet une salve correspondante d'un champ magnétique FLD2. Les salves de champ magnétique FLD2 sont détectées par le dispositif externe EDV comme une modulation de charge passive. Ce dernier peut ainsi extraire de son propre signal d'antenne le signal MS(DTx), pour en déduire les données DTx envoyées par le dispositif ND1.

L'oscillateur synchrone SO comprend un circuit oscillateur OSC1 comprenant une entrée de synchronisation reliée à la sortie d'un circuit de masquage G1, ici une porte ET. La porte G1 reçoit sur ses entrées le signal d'horloge externe CKe et un signal de masquage MSK. Le signal MSK est fourni par un générateur de masque MG à partir du signal de modulation MS(DTx). Le signal MSK présente une valeur de masquage, ici 0, et une valeur transparente, ici 1. Le circuit oscillateur OSC1 se synchronise sur le signal d'horloge externe CKe lorsque celui-ci n'est pas masqué (MSK=1) sur son entrée de synchronisation et fonctionne en mode de libre oscillation lorsque le signal CKe est masqué (MSK=0).

Dans un mode de réalisation, le signal de masquage présente la valeur de masquage (MSK=0) uniquement lorsque le signal de modulation MS(DTX) présente une valeur correspondant à l'émission d'une salve de champ magnétique FLD2, ici 1, et présente la valeur transparente (MSK=1) dans le cas contraire. Dans ce cas, le circuit oscillateur OSC1 fonctionne en mode de libre oscillation uniquement pendant l'émission d'une salve de champ magnétique.

Dans un mode de réalisation, le signal de masquage présente la valeur de masquage pendant l'émission d'une salve de champ magnétique FLD2, et est maintenu à cette valeur pendant un laps de temps supplémentaire suivant l'émission de la salve afin de laisser le temps au signal d'antenne AS de se stabiliser. Les figures 2A à 2D illustrent ce mode de réalisation. La figure 2A représente le signal CKs, la figure 2B le signal MS(DTx), la figure 2C le signal MSK et la figure 2D le signal Slm, composé de salves du signal CKs. Dans un souci de simplification du dessin, la fréquence du signal CKs n'est pas représentée à l'échelle et le signal MS(DTx) est représenté composé de créneaux de valeur logique 1 d'une durée constante Tp, séparés par un intervalle de temps Tp' constant. En pratique, le signal MS(DTx) peut présenter toute autre forme en fonction des données à émettre DTx, du codage qui est appliqué aux données DTx, et de la manière dont il est généré (notamment avec ou sans sous-porteuse).

La figure 2D montre que les salves du signal CKs, d'une durée Tp, sont appliquées au circuit d'antenne lorsque le signal de modulation MS(DTx) vaut 1 (une convention inverse pourrait être prévue). La figure 2C montre que le signal MSK est mis à 0 lorsque le signal MS(DTx) est égal à 1, et est maintenu à 0 pendant un temps Tm supérieur à Tp mais inférieur à Tp+Tp'. La durée de la période de resynchronisation, durant laquelle le circuit oscillateur est dans le mode d'oscillation synchrone (désigné Tsyn sur la figure 2C), est donc égale à Tp+Tp'-Tm.

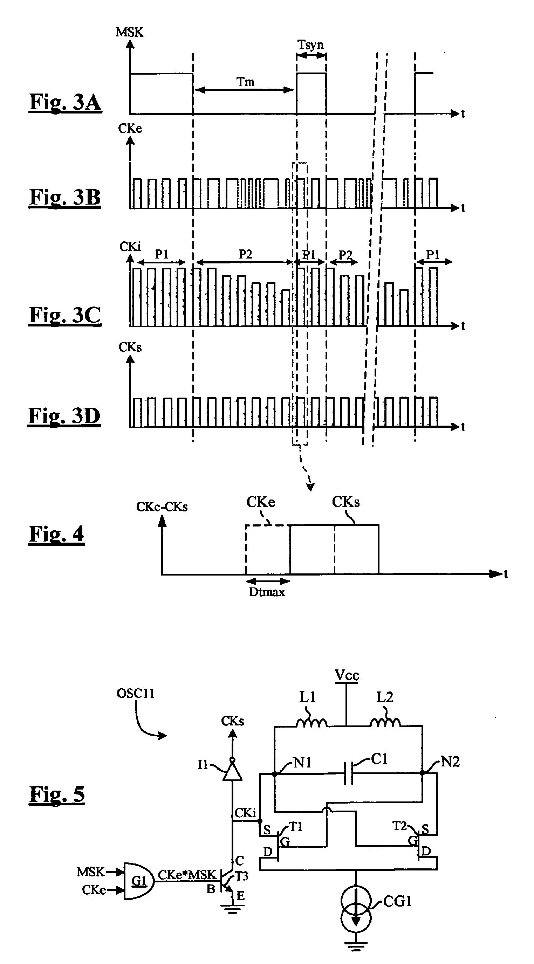

Les figures 3A à 3D montrent plus précisément le mécanisme de resynchronisation du signal CKs relativement au signal CKe, entre l'émission de deux salves de champ magnétique FLD2. La figure 3A représente le signal MSK et est identique à la figure 2C. La figure 3B représente le signal CKe et la figure 3D représente le signal CKs. La figure 3C représente un signal d'oscillation interne CKi du circuit oscillateur OSC1. Les signaux CKi et CKs sont identiques en fréquence et ne diffèrent que par leur amplitude, celle du signal CKs étant ramenée ici au niveau logique 1 ou 0.

La figure 3B montre que le signal d'horloge externe CKe présente une phase qui peut fluctuer pendant les périodes de libre oscillation. En effet, pendant ces périodes, le signal d'horloge interne CKs est injecté dans le circuit d'antenne et se superpose au signal induit par le champ magnétique externe FLD1. Bien que le signal CKs soit synchronisé avec une assez bonne précision au signal d'horloge externe CKe, le déphasage entre le signal induit et le signal injecté peut être suffisant pour entraîner une fluctuation de phase rendant le signal d'antenne inapte à fournir un signal d'horloge externe CKe fiable. Les figures 3C et 3D montrent par contre que la phase du signal d'horloge interne CKs reste sensiblement stable pendant les périodes de libre oscillation (repérées par la référence P2) grâce aux fréquentes périodes de resynchronisation (repérées par la référence P1) de durée Tsyn.

La figure 4 représente le déphasage maximal Dtmax (exprimé en décalage temporel) entre le signal CKs et le signal CKe, au moment où le signal CKs va être resynchronisé sur le signal CKe, soit lorsque le signal MSK va redevenir égal à 1. La valeur de Dtmax dépend de la précision du circuit oscillateur OSC1 qui est choisie en fonction de l'application visée. Un déphasage maximal de 1/4 de la période du signal CKe peut par exemple être visé.

Grâce aux resynchronisations intervenant avant chaque émission d'une salve de champ magnétique FLD2, il n'est pas nécessaire que le circuit oscillateur OSC1 présente une précision extrême garantissant un déphase maximal d'1/4 de période sur toute la durée d'une trame de données DTx. La précision nécessaire est ramenée à l'échelle d'un bit de donnée DTx et plus précisément à l'échelle de la durée d'une salve de champ magnétique, qui peut ne représenter qu'une fraction de bit DTx selon le codage utilisé (une donnée binaire pouvant éventuellement être codée en plusieurs salves de champ magnétique).

Divers types de circuits oscillateurs peuvent être prévus pour réaliser l'oscillateur synchrone OS. A titre d'exemple, la figure 5 montre un circuit oscillateur OSC11 comprenant un coeur d'oscillateur de type multivibrateur astable (appelé aussi oscillateur astable). Ce coeur d'oscillateur comprend deux self-inductances L1, L2, un condensateur C1, deux transistors T1, T2 de type MOS et une source de courant CG1. L'inductance L1 est connectée entre un noeud d'alimentation recevant une tension Vcc et un noeud N1. L'inductance L2 est connectée entre le noeud d'alimentation en tension Vcc et un noeud N2. Le condensateur C1 est connecté entre les noeuds N1, N2. Le transistor T1 a sa source S connectée au noeud N1, son drain D relié à la masse par l'intermédiaire de la source de courant CG1, et sa grille G connectée au noeud N2. Le transistor T2 a sa source S connectée au noeud N2, son drain D relié à la masse par l'intermédiaire de la source de courant CG1 et sa grille G connectée au noeud N1.

Par ailleurs, l'entrée de synchronisation du circuit oscillateur OSC11 est formée par la base B d'un transistor bipolaire T3 dont l'émetteur E est relié à la masse et dont le collecteur C est relié au noeud N1. La sortie du circuit oscillateur est formée par une porte inverseuse I1 fournissant le signal CKs, dont l'entrée et reliée au noeud N1, sur lequel le signal d'oscillation interne CKi est présent.

Lorsque le signal CKe est appliqué à la base B du transistor T3 (MSK=1), la phase du signal CKi sur le noeud N1 est imposée par le signal CKe. Le coeur du circuit oscillateur ne fonctionne alors pas comme un oscillateur astable mais comme un oscillateur monostable.

Lorsque le signal MSK est égal à 0, le transistor T3 n'est plus conducteur et le coeur du circuit oscillateur fonctionne en mode oscillateur astable et oscille librement à une fréquence d'auto-oscillation. Cette fréquence est réglée aussi proche que possible de la fréquence du signal CKe (13,56 MHz dans le cadre des normes précitées) par un choix approprié des inductances L1, L2 et du condensateur C1.

Dans une variante de réalisation, le circuit oscillateur OSC1 peut être du type numérique et configuré pour, dans le mode d'oscillation synchrone, analyser et mémoriser la fréquence du signal CKe reçu sur l'entrée de synchronisation, et recopier le signal CKe sur sa sortie. Lorsqu'il bascule dans le mode de libre oscillation, le circuit oscillateur reconstruit le signal CKs à partir de cette valeur mémorisée.

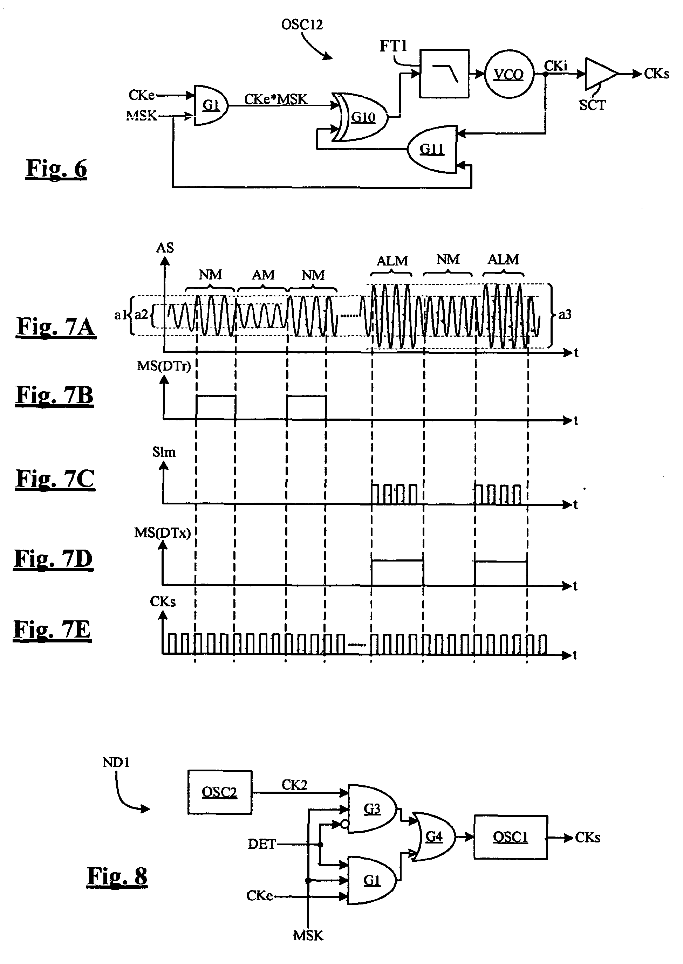

Comme autre exemple de réalisation, la figure 6 montre un circuit oscillateur OSC12 comprenant une boucle à verrouillage de phase ("Phase Locked Loop"). Le circuit OSC12 comprend une porte G10 de type OU Exclusif, un filtre passe-bas actif FT1, un VCO (oscillateur contrôlé en tension), un circuit suiveur SCT et une porte G11 de type ET. Le VCO fournit le signal d'oscillation interne CKi. Celui-ci est appliqué au circuit SCT dont la sortie fournit le signal d'horloge interne CKs. Le signal d'oscillation interne CKi est également renvoyé sur une entrée de la porte G10 par l'intermédiaire de la porte G11, qui reçoit sur une autre entrée le signal MSK. Une autre entrée de la porte G10 forme l'entrée de synchronisation du circuit OSC12 et est reliée à la sortie de la porte G1, qui fournit le signal d'horloge externe CKe lorsque le signal MSK est égal à 1. La porte G10 forme un comparateur de phase et sa sortie est envoyée sur une entrée de contrôle du VCO par l'intermédiaire du filtre passe-bas actif FT1.

Lorsque le signal MSK est égal à 1, la porte G11 est passante, la porte G10 reçoit à la fois le signal CKi et le signal CKe et fournit un signal de différence de phase. Ce signal différentiel forme, après filtrage passe-bas, une tension de consigne du VCO. Le signal CKi est ainsi asservi en phase au signal CKe. Lorsque le signal MSK passe à 0, les sorties des portes G1 et G11 passent à 0. La sortie de la porte G10 est forcée à 0. Des moyens permettent de maintenir à l'entrée du VCO la tension de consigne qu'il recevait avant le passage à 0 du signal MSK. Ces moyens comprennent par exemple une source de tension agencée dans le filtre passe-bas actif FT1, telle une pompe de charges. Ainsi, le VCO continue de fournir le signal CKi et maintient la phase du signal CKi proche de celle du signal CKe.

Les figures 7A à 7E illustrent de façon schématique une séquence de réception de données DTr (partie gauche des figures) ainsi qu'une séquence d'émission de données DTx (partie droite des figures).

La figure 7A montre la forme du signal d'antenne AS. La figure 7B représente le signal de modulation MS(DTr) extrait du signal d'antenne AS par le circuit DMCT. La figure 7C représente le signal de modulation de charge active Sml comprenant des salves du signal CKs. La figure 7D représente le signal de modulation MS(DTx) et la figure 7E représente le signal CKs. Le signal AS est ici un signal alternatif double alternance qui est l'image du champ magnétique FLD1 en mode réception. Des modes de réalisation du circuit d'antenne ACT peuvent toutefois comprendre une diode de redressement du signal d'antenne. Dans ce cas, celui-ci est un signal semi-alternance.

Pendant la réception de données DTr, le dispositif externe EDV (Cf. Fig. 1) module l'amplitude du champ magnétique FLD1 avec une profondeur de modulation qui dépend du protocole de communication choisi, et le signal d'antenne AS présente une modulation d'amplitude similaire. On distingue des périodes de non modulation NM où l'amplitude du signal d'antenne est maximale et des périodes de modulation AM où l'amplitude du signal d'antenne est minimale. Les maxima et minima de tension du signal AS dépendent en pratique de la distance entre le dispositif externe EDV et le dispositif ND1.

Pendant l'émission de données DTx, le signal d'antenne AS présente également des périodes de non modulation NM où son amplitude est identique à celle observée pendant les périodes de non modulation lors de la réception de données. L'amplitude du signal d'antenne ne dépend alors que du champ magnétique FLD1 émis par le dispositif externe EDV et de la distance entre les deux dispositifs. Le signal AS présente également des périodes de survoltage ALM lors de l'envoi de salves de champ magnétique FLD2. En effet, le signal CKs est alors injecté dans le circuit d'antenne et se superpose au signal induit par le champ magnétique externe FLD1. Le signal d'antenne comporte alors une composante induite et une composante injectée.

Il apparaîtra clairement à l'homme de l'art que le dispositif d'émission/réception de données ND1 selon l'invention est susceptible de divers modes de réalisation. Notamment le circuit de modulation MCT peut comprendre, en sus des moyens de modulation de charge active qui viennent d'être décrits des moyens de modulation de charge passive conventionnels, tel qu'un interrupteur de modulation de charge connecté au circuit d'antenne ACT.

Dans une variante de réalisation, le signal MSK est appliqué au circuit de contrôle de gain AGC et celui-ci est configuré pour forcer à 0 la sortie de l'amplificateur A2. Dans ce cas, il peut ne pas être nécessaire d'empêcher l'application du signal CKe sur l'entrée de synchronisation du circuit oscillateur OSC1, celui-ci basculant automatiquement dans le mode de libre oscillation lorsque le signal CKe passe à 0.

Le dispositif ND1 peut également comprendre des moyens d'extraction d'une tension d'alimentation Vcc à partir du signal d'antenne, tel qu'un circuit redresseur suivi d'un condensateur de lissage, pour permettre au dispositif ND1 de fonctionner en mode purement passif en l'absence d'une source d'alimentation locale.

Dans un mode de réalisation représenté sur la figure 8, le dispositif ND1 comprend également un oscillateur OSC2 qui n'est pas synchronisé au signal d'horloge externe CKe, par exemple un oscillateur à quartz. L'oscillateur OSC2 fournit un signal d'horloge CK2 permettant au dispositif DV1 de fonctionner en mode lecteur NFC pour dialoguer avec un circuit intégré sans contact passif ou avec un dispositif similaire configuré en mode passif. Dans ce cas, le circuit oscillateur synchrone OSC1 peut continuer à être utilisé pour fournir le signal d'horloge interne CKs. La sélection du signal d'horloge CKe ou CK2 appliqué sur l'entrée de synchronisation du circuit OSC1 peut être faite au moyen du signal DET décrit plus haut, en donnant la priorité au mode passif.

Toujours en référence à la figure 8, deux portes G3 et G4 sont ajoutées et la porte G1 est modifiée pour présenter trois entrées. La porte G3 est une porte ET présentant trois entrées dont une entrée inverseuse. La porte G4 est une porte de type OU à deux entrées. La porte G3 reçoit sur ses deux entrées non inverseuses le signal CK2 et le signal MSK, et reçoit le signal DET sur son entrée inverseuse. La porte G1 reçoit sur ses entrées les signaux CK2, DET et CKe. Les sorties des portes G1 et G3 sont appliquées à la porte G4 dont la sortie est reliée à l'entrée de synchronisation du circuit oscillateur OSC1. Lorsque le signal DET est égal à 1 (présence d'un champ magnétique externe FLD1), la sortie de la porte G3 est forcée à 0 et le dispositif fonctionne en mode passif de la manière décrite plus haut. Lorsque le signal DET est égal à 0, la sortie de la porte G1 est forcée à 0 et le signal MSK est forcé à 1 par le circuit MG. Le signal d'horloge CK2 est appliqué à l'entrée du circuit oscillateur OSC1, pour l'émission permanente du champ magnétique FLD1. La structure de la porte G2, recevant les signaux CKs et MS(DTx) et fournissant le signal Sml, peut être modifiée afin que celle-ci assure une modulation du signal CKs avec une profondeur de modulation réglable inférieure à 100%, notamment si le dispositif doit être conforme aux normes ISO 14443A et 1443B.

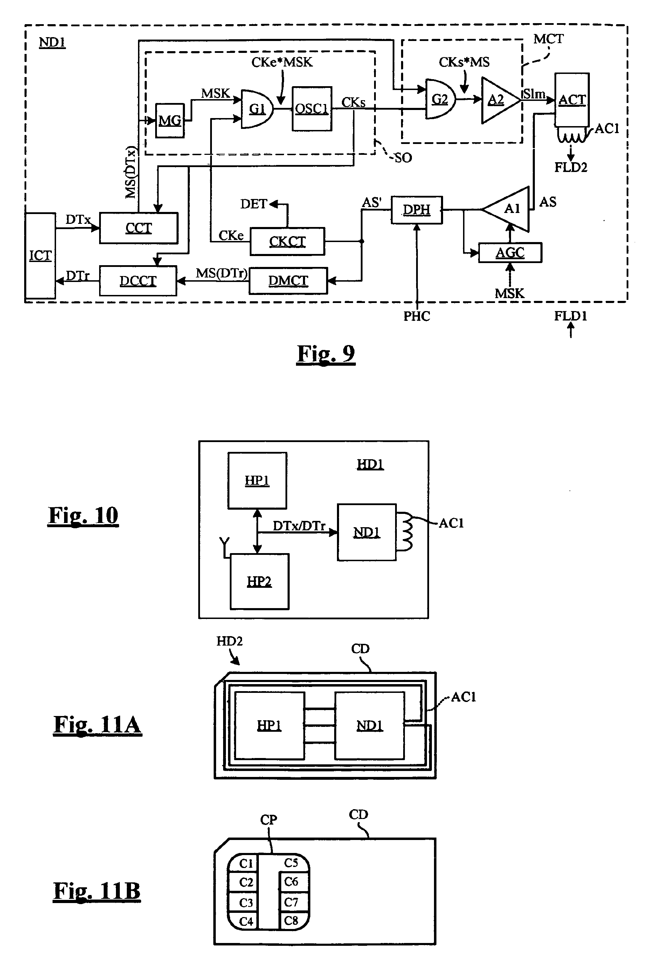

Dans l'exemple de réalisation représenté sur la figure 9, le dispositif ND1 comporte un déphaseur DPH. Ce déphaseur est par exemple agencé à la sortie de l'amplificateur A1. Le déphaseur DPH applique au signal d'antenne AS un déphasage Dp et fournit au circuit d'horloge CKCT et au circuit démodulateur DMCT un signal d'antenne déphasé AS'. Le déphasage Dp peut être fixe et déterminé lors de la conception du déphaseur DPH. Alternativement, le déphasage Dp peut être déterminé dynamiquement par une commande PHC appliquée au déphaseur, qui précise la valeur du déphasage Dp, par exemple entre 0 et 360°.

Le déphaseur DPH permet au dispositif ND1 d'émettre des salves de champ magnétique FLD2 qui présentent le déphasage Dp relativement au champ magnétique externe FLD1. Cela permet par exemple, dans certaines applications où la distance de communication ne doit pas dépasser un certain seuil (par exemple pour des raisons de sécurité), de réduire la distance de communication en dessous de ce seuil.

Ce mode de réalisation montre que le contrôle de la phase du signal CKs au moyen de l'oscillateur synchrone SO ne permet pas seulement de viser un décalage de phase nul entre le champ magnétique FLD2 et le champ magnétique FLD1. Le contrôle de la phase du signal CKs au moyen de l'oscillateur synchrone SO peut également permettre de contrôler une désynchronisation volontaire du champ magnétique FLD2 relativement au champ magnétique FLD1, tout en maintenant à une valeur aussi constante que possible le déphasage Dp entre les deux champs magnétiques.

Le dispositif d'émission/réception de données ND1 selon l'invention est également susceptible de diverses applications. Dans un exemple d'application représenté sur la figure 10, le dispositif ND1 est intégré dans un dispositif portable HD1 et est relié à un ou plusieurs processeurs hôtes, ici deux processeurs hôtes HP1, HP2 qui utilisent le dispositif ND1 comme interface de communication sans contact (interface NFC). Le dispositif portable HD1 est par exemple un téléphone mobile, un baladeur audionumérique, un assistant personnel numérique (PDA). Le processeur HP1 peut être le processeur principal du dispositif, ou un processeur sécurisé tel un processeur de carte SIM. Le processeur HP2 peut par exemple être le processeur en bande de base d'un téléphone mobile, assurant également des communications par canal GSM.

Dans un autre exemple d'application représenté sur les figures 11A, 11B, le dispositif ND1 est relié à un processeur hôte HP1 et l'ensemble est intégré dans un support plastique CD pour former une carte à puce HD2. La bobine d'antenne AC1 est par exemple une bobine coplanaire présentant une ou plusieurs spires. Sur sa face arrière (Fig. 11B), la carte HD2 est équipée d'un groupe CP de contacts. La carte HD2 peut par exemple former une carte SIM NFC. Le groupe de contacts peut comprendre dans ce cas des contacts C1 à C8 selon la norme ISO 7816. La carte HD2 peut également former une carte de type SD destinée à être insérée dans un dispositif quelconque (téléphone portable, ordinateur personnel,...) en tant qu'interface de communication NFC.

## Revendications

1. Procédé d'émission de données par couplage inductif, comprenant les étapes consistant à :
- recevoir un signal d'antenne (AS, AS') au moyen d'un circuit d'antenne inductif (ACT, AC1) en présence d'un champ magnétique externe alternatif (FLD1),
- extraire du signal d'antenne (AS, AS') un premier signal périodique (CKe),
- produire un second signal périodique (CKs) au moyen d'un oscillateur synchrone (SO, OSC1) présentant une entrée de synchronisation recevant le premier signal périodique (CKe), l'oscillateur présentant un mode d'oscillation synchrone calé en phase sur le premier signal périodique et un mode de libre oscillation, et
- appliquer au circuit d'antenne des salves du second signal périodique (CKs) pour générer un champ magnétique (FLD2) de modulation de charge active,
**caractérisé en ce qu'**il comprend les étapes consistant à :
- placer l'oscillateur dans le mode d'oscillation synchrone avant chaque application d'une salve du second signal périodique (CKs) au circuit d'antenne, et
- placer l'oscillateur dans un mode de libre oscillation pendant l'application d'une salve du second signal périodique (CKs) au circuit d'antenne.

2. Procédé selon la revendication 1, comprenant l'étape consistant à, après l'application d'une salve du second signal périodique (CKs) au circuit d'antenne, maintenir l'oscillateur dans le mode de libre oscillation pendant un temps de stabilisation du signal d'antenne, avant de replacer l'oscillateur dans le mode d'oscillation synchrone.

3. Procédé selon l'une des revendications 1 et 2, comprenant les étapes consistant à :
- fournir un signal de modulation porteur de données (MS(DTx)),
- appliquer le second signal périodique (CKs) au circuit d'antenne lorsque le signal de modulation (MS(DTx)) présente une première valeur logique,
- générer un signal de masquage ayant une valeur de masquage au moins lorsque le signal de modulation (MS(DTx)) présente la première valeur logique, et
- bloquer l'application du premier signal périodique (CKe) à l'entrée de synchronisation de l'oscillateur (SO, OSC1) lorsque le signal de masquage présente la valeur de masquage.

4. Procédé selon les revendications 2 et 3, comprenant l'étape consistant à conférer à la valeur de masquage du signal de masquage une durée supérieure à celle de la première valeur logique du signal de modulation (MS(DTx)), afin de maintenir l'oscillateur dans le mode de libre oscillation pendant le temps de stabilisation du signal d'antenne.

5. Procédé selon l'une des revendications 1 à 4, comprenant une étape consistant à déphaser le second signal périodique (CKs) relativement au signal d'antenne (AS).

6. Dispositif (ND1) d'émission et de réception de données par couplage inductif comprenant :
- un circuit d'antenne inductif (ACT) dans lequel apparaît un signal d'antenne (AS, AS') en présence d'un champ magnétique externe alternatif,
- des moyens (CKCT) pour extraire du signal d'antenne (AS, AS') un premier signal périodique (CKe),
- un oscillateur synchrone (SO, OSC1) présentant une entrée de synchronisation recevant le premier signal périodique (CKe), fournissant un second signal périodique (CKs), l'oscillateur présentant un mode d'oscillation synchrone calé en phase sur le premier signal périodique et un mode de libre oscillation, et
- un circuit de modulation de charge active (MCT), configuré pour appliquer au circuit d'antenne des salves du second signal périodique (CKs) et générer un champ magnétique (FLD2) de modulation de charge active,
dispositif **caractérisé en ce qu'**il est configuré pour :
- placer l'oscillateur dans le mode d'oscillation synchrone avant chaque application d'une salve du second signal périodique (CKs) au circuit d'antenne, et
- placer l'oscillateur dans le mode de libre oscillation pendant l'application d'une salve du second signal périodique (CKs) au circuit d'antenne.

7. Dispositif selon la revendication 6, configuré pour, après l'application d'une salve du second signal périodique (CKs) au circuit d'antenne, maintenir l'oscillateur dans le mode de libre oscillation pendant un temps de stabilisation du signal d'antenne, avant de replacer l'oscillateur dans le mode d'oscillation synchrone.

8. Dispositif selon l'une des revendications 6 et 7, configuré pour :
- générer ou recevoir un signal de modulation de charge porteur de données (MS(DTx)),
- appliquer le second signal périodique (CKs) au circuit d'antenne lorsque le signal de modulation (MS(DTx)) présente une première valeur logique,
- générer un signal de masquage ayant une valeur de masquage au moins lorsque le signal de modulation présente la première valeur logique, et
- bloquer l'application du premier signal périodique (CKe) à l'entrée de synchronisation de l'oscillateur (SO, OSC1) lorsque le signal de masquage présente la valeur de masquage.

9. Dispositif selon les revendications 7 et 8, configuré pour conférer à la valeur de masquage du signal de masquage (MSK) une durée supérieure à celle de la première valeur logique du signal de modulation (MS(DTx)), afin de maintenir l'oscillateur dans le mode de libre oscillation pendant le temps de stabilisation du signal d'antenne.

10. Dispositif selon l'une des revendications 6 à 9, dans lequel l'oscillateur synchrone (SO, OSC1, OSC11) est du type oscillateur astable présentant une fréquence propre d'auto-oscillation déterminée par des composants (L1, L2, C1) de l'oscillateur.

11. Dispositif selon l'une des revendications 6 à 9, dans lequel l'oscillateur synchrone (SO, OSC1) est du type numérique et est configuré pour, dans le mode d'oscillation synchrone, recopier en sortie la période du signal périodique (CKe) appliqué sur l'entrée de synchronisation, et, dans le mode de libre oscillation, reconstituer en sortie la fréquence reçue sur l'entrée de synchronisation pendant le mode d'oscillation synchrone.

12. Dispositif selon l'une des revendications 6 à 9, dans lequel l'oscillateur synchrone (SO, OSC1, OSC12) comprend une boucle à verrouillage de phase comprenant :
- un comparateur de phase (G10) fournissant un signal de phase,
- un filtre passe-bas actif (FT1) recevant le signal de phase et fournissant une tension de contrôle,
- un oscillateur contrôlé en tension (VCO) recevant la tension de contrôle et fournissant le second signal périodique (CKi, CKs), et
- des moyens (FT1) pour, lors du passage dans le mode de libre oscillation, bloquer le comparateur de phase (G10) et maintenir à l'entrée de l'oscillateur contrôlé en tension (VCO) la valeur de la tension de contrôle.

13. Dispositif selon l'une des revendications 6 à 12, comprenant des moyens (DPH) pour déphaser le second signal périodique (CKs) relativement au signal d'antenne (AS).

14. Dispositif (HD1, HD2) comprenant :
- un dispositif d'émission et de réception de données (ND1) selon l'une des revendications 6 à 13, et
- au moins un processeur hôte (HP1, HP2) fournissant au dispositif des données à émettre (DTx).

15. Dispositif selon la revendication 14, monté dans ou sur un support portable (CD).

16. Carte à puce (HD2), comprenant au moins un processeur (HP1, HP2) et un dispositif d'émission et de réception de données (ND1) selon l'une des revendications 6 à 13.

## Claims

1. Method of emitting data by inductive coupling, comprising the steps of:
- receiving an antenna signal (AS, AS') by means of an inductive antenna circuit (ACT, AC1) in the presence of an alternating external magnetic field (FLD1),
- extracting from the antenna signal (AS, AS') a first periodic signal (CKe),
- producing a second periodic signal (CKs) by means of a synchronous oscillator (SO, OSC1) having a synchronization input receiving the first periodic signal (CKe), the oscillator having a synchronous oscillation mode set in phase with the first periodic signal and a free oscillation mode, and
- applying to the antenna circuit bursts of the second periodic signal (CKs) to generate an active load modulation magnetic field (FLD2),
**characterized in that** it comprises the steps of:
- placing the oscillator in the synchronous oscillation mode before each application of a burst of the second periodic signal (CKs) to the antenna circuit, and
- placing the oscillator in a free oscillation mode during the application of a burst of the second periodic signal (CKs) to the antenna circuit.

2. Method according to claim 1, comprising the step of, after the application of a burst of the second periodic signal (CKs) to the antenna circuit, maintaining the oscillator in the free oscillation mode during a stabilization time of the antenna signal, before placing the oscillator back in the synchronous oscillation mode.

3. Method according to one of claims 1 and 2, comprising the steps of:
- supplying a data carrying modulation signal (MS(DTx)),
- applying the second periodic signal (CKs) to the antenna circuit when the modulation signal (MS(DTx)) has a first logic value,
- generating a masking signal having a masking value at least when the modulation signal (MS(DTx)) has the first logic value, and
- blocking the application of the first periodic signal (CKe) to the synchronization input of the oscillator (SO, OSC1) when the masking signal has the masking value.

4. Method according to one of claims 2 and 3, comprising the step of conferring to the masking value of the masking signal a duration greater than that of the first logic value of the modulation signal (MS(DTx)), in order to maintain the oscillator in the free oscillation mode during the stabilization time of the antenna signal.

5. Method according to one of claims 1 to 4, comprising a step of dephasing the second periodic signal (CKs) relative to the antenna signal (AS).

6. Data emission/reception device (ND1) by inductive coupling comprising:
- an inductive antenna circuit (ACT) in which an antenna signal (AS, AS') appears in the presence of an alternating external magnetic field,
- means (CKCT) for extracting a first periodic signal (CKe) from the antenna signal (AS, AS'),
- a synchronous oscillator (SO, OSC1) having a synchronization input receiving the first periodic signal (CKe), supplying a second periodic signal (CKs), the oscillator having a synchronous oscillation mode set in phase with the first periodic signal and a free oscillation mode, and
- an active load modulation circuit (MCT) configured to apply bursts of the second periodic signal (CKs) to the antenna circuit and to generate an active load modulation magnetic field (FLD2),
**characterized in that** the device is configured to:
- place the oscillator in the synchronous oscillation mode before each application of a burst of the second periodic signal (CKs) to the antenna circuit, and
- place the oscillator in the free oscillation mode during the application of a burst of the second periodic signal (CKs) to the antenna circuit.

7. Device according to claim 6, configured to, after the application of a burst of the second periodic signal (CKs) to the antenna circuit, maintain the oscillator in the free oscillation mode during a stabilization time of the antenna signal, before placing the oscillator back in the synchronous oscillation mode.

8. Device according to one of claims 6 and 7, configured to:
- generate or receive a data carrying load modulation signal (MS(DTx)),
- apply the second periodic signal (CKs) to the antenna circuit when the modulation signal (MS(DTx)) has a first logic value,
- generate a masking signal having a masking value at least when the modulation signal has the first logic value, and
- block the application of the first periodic signal (CKe) to the synchronization input of the oscillator (SO, OSC1) when the masking signal has the masking value.

9. Device according to one of claims 7 and 8, configured to confer, to the masking value of the masking signal (MSK), a duration greater than that of the first logic value of the modulation signal (MS(DTx)), in order to maintain the oscillator in the free oscillation mode during the stabilization time of the antenna signal.

10. Device according to one of claims 6 to 9, wherein the synchronous oscillator (SO, OSC1, OSC11) is of the astable oscillator type having its own auto-oscillation frequency determined by components (L1, L2, C1) of the oscillator.

11. Device according to one of claims 6 to 9, wherein the synchronous oscillator (SO, OSC1) is of the digital type and is configured to, in the synchronous oscillation mode, recopy on output the period of the periodic signal (CKe) applied on the synchronization input, and, in the free oscillation mode, reconstitute on output the frequency received on the synchronization input during the synchronous oscillation mode.

12. Device according to one of claims 6 to 9, wherein the synchronous oscillator (SO, OSC1, OSC12) comprises a phase locking loop comprising:
- a phase comparator (G10) supplying a phase signal,
- an active low-pass filter (FT1) receiving the phase signal and supplying a control voltage,
- a voltage controlled oscillator (VCO) receiving the control voltage and supplying the second periodic signal (CKi, CKs), and
- means (FT1) for blocking the phase comparator (G10) during the switch into the free oscillation mode and for maintaining the value of the control voltage at the input of the voltage controlled oscillator (VCO).

13. Device according to one of claims 6 to 12, comprising means (DPH) for dephasing the second periodic signal (CKs) relative to the antenna signal (AS).

14. Device (HD1, HD2) comprising:
- a data emission/reception device (ND1) according to one of claims 6 to 13, and
- at least one host processor (HP1, HP2) supplying the data to emit (DTx) to the device.

15. Device according to claim 14, mounted in or on a portable support (CD).

16. Chip card (HD2), comprising at least one processor (HP1, HP2) and a data emission/reception device (ND1) according to one of claims 6 to 13.

## Patentansprüche

1. Verfahren zum Senden von Daten durch induktive Kopplung, umfassend die folgenden Schritte:
- Empfang eines Antennensignals (AS, AS') mittels eines induktiven Antennenkreises (ACT, AC1) in Gegenwart eines externen magnetischen Wechselfelds (FLD1),
- Extraktion eines ersten periodischen Signals (CKe) aus dem Antennensignal (AS, AS'),
- Generierung eines zweiten periodischen Signals (CKs) mittels eines Synchronoszillators (SO, OSC1), der einen, das erste periodische Signal (CKe) empfangenden Synchronisierungseingang aufweist, wobei der Oszillator einen auf das erste periodische Signal phasenabgeglichenen Synchron-Oszillationsmodus und einen freien Oszillationsmodus aufweist, und
- Anlegen von Bursts des zweiten periodischen Signals (CKs) an den Antennenkreis, um ein Magnetfeld (FLD2) zur aktiven Lastmodulation zu generieren,
**dadurch gekennzeichnet, dass** es die folgenden Schritte umfasst:
- Schalten des Oszillators in den Synchron-Oszillationsmodus vor jedem Anlegen eines Bursts des zweiten periodischen Signals (CKs) an den Antennenkreis, und
- Schalten des Oszillators in einen freien Oszillationsmodus während dem Anlegen eines Bursts des zweiten periodischen Signals (CKs) an den Antennenkreis.

2. Verfahren nach Anspruch 1, umfassend den Schritt, der darin besteht, den Oszillator nach dem Anlegen eines Bursts des zweiten periodischen Signals (CKs) an den Antennenkreis während einer Stabilisierungsdauer des Antennensignals im freien Oszillationsmodus zu halten, bevor er wieder in den Synchron-Oszillationsmodus geschaltet wird.

3. Verfahren nach einem der Ansprüche 1 und 2, umfassend die folgenden Schritte:
- Abgabe eines Daten tragenden Modulationssignals (MS(DTx)),
- Anlegen des zweiten periodischen Signals (CKs) an den Antennenkreis, wenn das Modulationssignal (MS(DTx)) einen ersten logischen Wert aufweist,
- Generierung eines Maskierungssignals mit einem Maskierungswert wenigstens dann, wenn das Modulationssignal (MS(DTx)) den ersten logischen Wert aufweist, und
- Blockierung des Anlegens des ersten periodischen Signals (CKe) am Synchronisierungseingang des Oszillators (SO, OSC1), wenn das Maskierungssignal den Maskierungswert aufweist.

4. Verfahren nach den Ansprüchen 2 und 3, umfassend den Schritt, der darin besteht, dem Maskierungswert des Maskierungssignals eine Dauer zu verleihen, die länger ist als die Dauer des ersten logischen Werts des Modulationssignals (MS(DTx)), um den Oszillator während der Stabilisierungsdauer des Antennensignals im freien Oszillationsmodus zu halten.

5. Verfahren nach einem der Ansprüche 1 bis 4, umfassend einen Schritt, der darin besteht, das zweite periodische Signal (CKs) in Bezug auf das Antennensignal (AS) zu dephasieren.

6. Vorrichtung (ND1) zum Senden und Empfangen von Daten durch induktive Kopplung, umfassend:
- einen induktiven Antennenkreis (ACT), in dem ein Antennensignal (AS, AS') in Gegenwart eines externen magnetischen Wechselfelds erscheint,
- Mittel (CKCT) zur Extraktion eines ersten periodischen Signals (CKe) aus dem Antennensignal (AS, AS'),
- einen Synchronoszillator (SO, OSC1), der einen, das erste periodische Signal (CKe) empfangenden und ein zweites periodisches Signal (CKs) abgebenden Synchronisierungseingang aufweist, wobei der Oszillator einen auf das erste periodische Signal phasenabgeglichenen Synchron-Oszillationsmodus und einen freien Oszillationsmodus aufweist, und
- einen Modulationskreis zur aktiven Lastmodulation (MCT), der konfiguriert ist, um an den Antennenkreis Bursts des zweiten periodischen Signals (CKs) anzulegen und ein Magnetfeld (FLD2) zur aktiven Lastmodulation zu generieren,
Vorrichtung **dadurch gekennzeichnet, dass** sie konfiguriert ist, um:
- den Oszillator vor jedem Anlegen eines Bursts des zweiten periodischen Signals (CKs) an den Antennenkreis in den Synchron-Oszillationsmodus zu schalten und
- den Oszillator während dem Anlegen eines Bursts des zweiten periodischen Signals (CKs) an den Antennenkreis in den freien Oszillationsmodus zu schalten.

7. Vorrichtung nach Anspruch 6, die konfiguriert ist, um den Oszillator nach dem Anlegen eines Bursts des zweiten periodischen Signals (CKs) an den Antennenkreis während einer Stabilisierungsdauer des Antennensignals im freien Oszillationsmodus zu halten, bevor er wieder in den Synchron-Oszillationsmodus geschaltet wird.

8. Vorrichtung nach einem der Ansprüche 6 und 7, die konfiguriert ist, um:
- ein Daten tragendes Lastmodulationssignal (MS(DTx)) zu generieren oder zu empfangen,
- das zweite periodische Signal (CKs) an den Antennenkreis anzulegen, wenn das Modulationssignal (MS(DTx)) einen ersten logischen Wert aufweist,
- ein Maskierungssignal mit einem Maskierungswert wenigstens dann zu generieren, wenn das Modulationssignal den ersten logischen Wert aufweist, und
- das Anlegen des ersten periodischen Signals (CKe) an den Synchronisierungseingang des Oszillators (SO, OSC1) zu blockieren, wenn das Maskierungssignal den Maskierungswert aufweist.

9. Vorrichtung nach den Ansprüchen 7 und 8, die konfiguriert ist, um dem Markierungswert des Maskierungssignals (MSK) eine Dauer zu verleihen, die länger ist als die Dauer des ersten logischen Werts des Modulationssignals (MS(DTx)), um den Oszillator während der Stabilisierungsdauer des Antennensignals im freien Oszillationsmodus zu halten.

10. Vorrichtung nach einem der Ansprüche 6 bis 9, wobei der Synchronoszillator (SO, OSC1, OSC11) dem Typ der astabilen Oszillatoren gehört, die eine durch Komponenten (L1, L2, C1) des Oszillators festgelegte Eigenfrequenz der Eigenschwingung aufweisen.

11. Vorrichtung nach einem der Ansprüche 6 bis 9, wobei der Synchronoszillator (SO, OSC1) dem Typ der digitalen Oszillatoren gehört und konfiguriert ist, um im synchronen Oszillationsmodus die Periode des an den Synchronisierungseingang angelegten periodischen Signals (CKe) am Ausgang zurückzukopieren und im freien Oszillationsmodus die am Synchronisierungseingang im Synchron-Oszillationsmodus erhaltene Frequenz am Ausgang zu rekonstituieren.

12. Vorrichtung nach einem der Ansprüche 6 bis 9, wobei der Synchronoszillator (SO, OSC1, OSC12) eine Phasenverriegelungsschleife umfasst, die folgendes beinhaltet:
- einen Phasenkomparator (G10), der ein Phasensignal abgibt,
- einen aktiven Tiefpaßfilter (FT1), der das Phasensignal empfängt und eine Kontrollspannung abgibt,
- einen spannungskontrollierten Oszillator (VCO), der die Kontrollspannung empfängt und das zweite periodische Signal (CKi, CKs) abgibt, und
- Mittel (FT1), um den Phasenkomparator (G10) beim Übergang in den freien Oszillationsmodus zu blockieren und den Wert der Kontrollspannung am Eingang des spannungskontrollierten Oszillators (VCO) zu halten.

13. Vorrichtung nach einem der Ansprüche 6 bis 12, umfassend Mittel (DPH), um das zweite periodische Signal (CKs) in Bezug auf das Antennensignal (AS) zu dephasieren.

14. Vorrichtung (HD1, HD2) umfassend:
- eine Datensende- und -empfangsvorrichtung (ND1) nach einem der Ansprüche 6 bis 13, und
- wenigstens einen Hostprozessor (HP1, HP2), der zu sendende Daten (Dtx) an die Vorrichtung abgibt.

15. Vorrichtung nach Anspruch 14, die in oder auf einem tragbaren Träger (CD) montiert ist.

16. Chipkarte (HD2) umfassend wenigstens einen Prozessor (HP1, HP2) und eine Datensende- und -empfangsvorrichtung (ND1) nach einem der Ansprüche 6 bis 13.
